Europäisches Patentamt

European Patent Office

Office européen des brevets

(11) Publication number: **0 663 459 A1**

(19)

## EUROPEAN PATENT APPLICATION
### published in accordance with Art. 158(3) EPC

(21) Application number: **93921076.1**

(51) Int. Cl.6: **C25B 9/00**

(22) Date of filing: **28.09.93**

(86) International application number:
**PCT/JP93/01379**

(87) International publication number:
**WO 94/08070 (14.04.94 94/09)**

(30) Priority: **28.09.92 JP 258682/92**

(43) Date of publication of application:
**19.07.95 Bulletin 95/29**

(84) Designated Contracting States:
**CH DE FR GB IT LI NL**

(71) Applicant: **OHMI, Tadahiro**
**1-17-301, Komegabukuro 2-chome**
**Aoba-ku**
**Sendai-shi**
**Miyagi-ken 980 (JP)**

(72) Inventor: **OHMI, Tadahiro**
**1-17-301, Komegabukuro 2-chome**
**Aoba-ku**
**Sendai-shi**
**Miyagi-ken 980 (JP)**

(74) Representative: **Weitzel, Wolfgang, Dr.-Ing.**
**Patentanwalt**
**Friedenstrasse 10**
**D-89522 Heidenheim (DE)**

(54) **HYDROGEN AND OXYGEN GENERATING APPARATUS.**

(57) A generator which generates high electric power at a low cost without substantially using fossil fuel and without contaminating the global environment, and which can be substituted for thermal power generator. A solution prepared by adding a substance, which dissociates in a solvent which does not dissociate by itself, to the same solvent is contained in a container the inner surface of which has corrosion resistance and insulation. The anode having a small work function and the cathode having a large work function are immersed in this solution with them opposed. This generator has a container the inner surface of which has corrosion resistance and insulation, a solution of a mixture of anhydrous hydrogen fluoride and water, held in the container and isolated from the atmospheric air, an anode of a material having corrosion resistance and a small work function, a cathode of a material having corrosion resistance and a large work function, both of the anode and cathode being immersed in the solution and mutually opposed, and a heat application means.

EP 0 663 459 A1

Rank Xerox (UK) Business Services
(3.10/3.09/3.3.4)

Fig. 5

H₂O/HF

**Technical Field**

The present invention relates to a hydrogen and oxygen generating apparatus, and, in greater detail, relates to a hydrogen and oxygen generating apparatus which consumes almost no fossil fuels, does not contaminate the global environment, and is capable of producing large amounts of highly pure hydrogen and oxygen at low costs.

**Background Art**

Hydrogen energy is a clean form of energy which will be of increasing importance in the future; however, whether obtained as combustion energy, or as electrical energy in a fuel cell, greater energy can be obtained if oxygen is also present.

Currently, the following methods are known for the industrial production of hydrogen.

A method in which water is applied to red hot coke is used in iron works and the like for the production of hydrogen at a low cost; the hydrogen is produced by means of the following reaction:

$$C + H_2O \text{ (steam)} \rightarrow CO + H_2$$
$$CO + FeO \rightarrow CO_2 + Fe.$$

However, it is necessary to remove the CO (carbon monoxide) which is produced as a by-product, so that the purity is low.

In the method employing the thermal cracking of petroleum gas, thermal cracking is caused at high temperatures in petrochemical complexes.

$$CnH_{2n+2} \rightarrow nCH_2 + H_2$$

This reaction also involves a number of side reactions, so that the purity of the hydrogen is low.

These production methods do not merely possess problems with respect to purity; the production sites are also limited to iron works and petrochemical complexes, and moreover, as these methods only involve the production of hydrogen, oxygen is then necessary for efficient use in fuel cells and the like.

The production of oxygen is widely carried out by means of the fractional distillation of liquid air; however, separation of the oxygen from nitrogen, argon, and the like is difficult, and the costs involved are high.

Electrolysis is a commonly known method for the simultaneous production of hydrogen and oxygen; however, as the costs involved are dramatically higher than those of other methods, it can only be used for some uses requiring high purity (for example, semiconductor production). Development has proceeded in the use of natural sources of energy, such as solar energy and the like, in order to reduce the cost thereof; however,there have been problems in that it is difficult to obtain large amounts of power,and the initial costs thereof are high.

The present invention has an object thereof to provide a hydrogen and oxygen generating apparatus which uses almost no fossil fuels, does not contaminate the global environment, and is capable of producing highly pure hydrogen and oxygen in large amounts at low cost.

**Disclosure of the Invention**

The hydrogen and oxygen generating apparatus in accordance with the present invention, which solves the problems described above, is characterized in that:

a solution prepared by adding, to a solvent which does not disassociate by itself, a substance which disassociates in this solvent, is contained in a container, the inner surface of which has corrosion resistance with respect to the solution;

an anode having a small work function and a cathode having a large work function are immersed in the solution contained within the container so as to be mutually opposed; and

a heat application mechanism for applying a predetermined amount of heat to the solution is provided.

Here, the properties with which the solvent should be provided are as follows.

(1) The solvent should be in a liquid state in a wide temperature range, and should be in a liquid state at temperatures near room temperature.

(2) In the superpure state in which the dissociating substance is not added, the solvent should possess as large an electrical resistance as possible.

(3) The solvent should dissociate as high a proportion as possible of the added substance to produce positive and negative ions, and the ion concentration should be as high as possible, while the electrical resistance should be as low as possible.

(4) In order to efficiently conduct the circulation of the solvent, the viscosity thereof should be as low as possible.

(5) The solvent should not be flammable, combustible, or explosive.

Furthermore, the properties required in the substance which is added are as follows.

(1) The substance should dissociate in the solvent to a near ideal state at concentrations which are as high as possible.

(2) The ions which are generated should not be corrosive or reactive, and after exchanging electrons with the anode and cathode, should not be deposited on or adhere to the surfaces of the electrodes, and should become either gaseous or liquid.

Furthermore, with respect to the cathode, as large a work function as possible is required in order to provide electrons as efficiently as possible to the positive ions which are generated in the solvent.

With respect to the anode, as small a work function as possible is required in order to accept electrons as efficiently as possible from the negative ions which are generated in the solvent.

More concretely, the hydrogen and oxygen generating apparatus in accordance with the present invention is characterized in being provided with at least:

a container, possessing an inner surface having corrosion resistance with respect to hydrogen fluoride containing water and, in some cases, having electrical insulation properties;

a solution, which is stored within the container so as to be isolated from the atmosphere and which comprises a mixture of anhydrous hydrogen fluoride and water;

an anode comprising a material having a small work function and possessing corrosion resistance with respect to hydrogen fluoride containing water, and a cathode comprising a material having a large work function and possessing corrosion resistance with respect to hydrogen fluoride containing water, which are immersed in the solution so as to be mutually opposed;

a heat application mechanism for applying a predetermined amount of heat to the solution; and

a mechanism for continuously suppling water to the solution.

## Brief Description of the Drawings

Figure 1 is a conceptual diagram which illustrates the principle of the present invention.

Figure 2 is a graph showing the relationship between the concentration of water in the hydrogen fluoride and the degree of dissociation.

Figure 3 is a conceptual diagram of a hydrogen and oxygen generating apparatus which depicts an example of the present invention.

Figure 4 is a graph showing the relationship between the conductivity of the hydrogen fluoride containing water and temperature.

Figure 5 is a conceptual diagram of a hydrogen and oxygen generating apparatus showing a modified example of the present invention.

Figure 6 is a conceptual diagram of a hydrogen and oxygen generating apparatus showing a modified example of the present invention.

Figure 7 is a conceptual diagram of a hydrogen and oxygen generating apparatus showing another modified example of the present invention.

Figure 8 is a conceptual diagram of a hydrogen and oxygen generating apparatus showing another example of the present invention.

(Description of the References)

| | |
|---|---|
| 1 | gas generator |
| 2 | water mixing chamber |
| 3 | heating and cooling mechanism (heat application mechanism) |
| 4 | pump |
| 5 | piping |
| 6 | thermometer |
| 10 | load |
| 11,11',11" | anodes |
| 12,12',12" | cathodes |

4

| 13 | container |
|----|----------|
| 14 | partition |
| 15 | gas/liquid separation tanks |
| 16 | cooler |
| 17 | deoxidation column |
| 18 | dehydration column |
| 19,20 | extension wiring |
| 21 | conductometer |
| 51,51',51" | dividing plates |
| 52,52',52" | dividing plates |
| 60 | entrance |
| 61 | unit |
| 63 | main input pipe |
| 64 | main output pipe |
| 65 | exit |
| 66 | anode |
| 67 | cathode |
| 68 | introduction port |
| 69 | exhaust port |
| 71,72 | dividing plates. |

**Function**

Hereinbelow, the function of the present invention will be explained together with embodiment examples of the present invention.

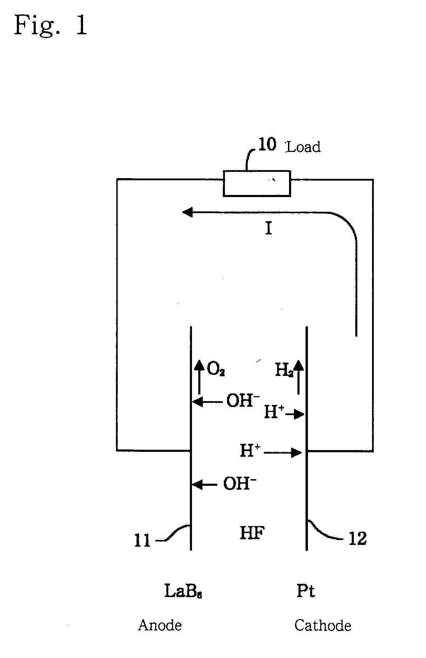

In Figure 1, a conceptual diagram of the present invention is shown.

For the purposes of explaining the function, a representative example will be discussed in which liquid hydrogen fluoride is used as the solvent and water is used as the substance which is added thereto; however, the present invention is not limited thereto, and other substances to which the principle of the present invention discussed below can be applied are also included in the scope of the present invention.

As shown in Figure 1, an anode 11 comprising a material having a small work function and a cathode 12 comprising a material having a large work function are disposed in mutual opposition with a predetermined gap therebetween. The anode 11 and the cathode 12 are connected via a load 10, and when the gap between the electrodes is filled with hydrogen fluoride containing water, electrons begin to flow via the load between electrodes from the anode having a small work function to the cathode having a large work function, so that a difference in potential is generated. However, when a load is externally connected and a potential difference is generated, it becomes difficult for a current to flow, so in order to efficiently generate hydrogen and oxygen, the load resistance is normally set to zero and the anode and cathode are directly connected by a wire.

Furthermore, the water dissolved in the hydrogen fluoride dissociates and forms $H^+$ and $OH^-$.

The $H^+$ ions and $OH^-$ ions move to the cathode and anode sides, respectively, and based on the following reactions:

$$4H^+ + 4e^- \rightarrow 2H_2 \qquad (1)$$

$$4OH^- \rightarrow O_2 + 2H_2O + 4e^- \qquad (2)$$

hydrogen gas and oxygen gas are generated and a current flows externally. That is to say, at the cathode, electrons are donated to the $H^+$ ions and $H_2$ is generated, while at the anode, electrons are accepted from the $OH^-$ ions, and $O_2$ is generated. The $H_2O$ which is generated at the anode again receives thermal energy in the hydrogen fluoride solution, and dissociates into $H^+$ and $OH^-$ ions.

Generally, water itself dissociates into $H^+$ and $OH^-$ in a liquid state, but, the degree of dissociation is small; for example, in neutral water the $H^+$ and $OH^-$ ion concentration has the very small value of $10^{-7}$ mol/l. Accordingly, even if electrodes are immersed in such water, only a very small amount of current is obtained, and such a system is unsuited to practical application. Furthermore, the case in which water is added to liquid hydrogen chloride differs completely from the case in which water is added to hydrogen fluoride. That is to say, even if water is added to liquid hydrogen chloride, there is almost no disassociation of the water. In view of this point, it can be understood that it is highly desirable to use liquid hydrogen

5

fluoride as the solvent and to use water as the substance.

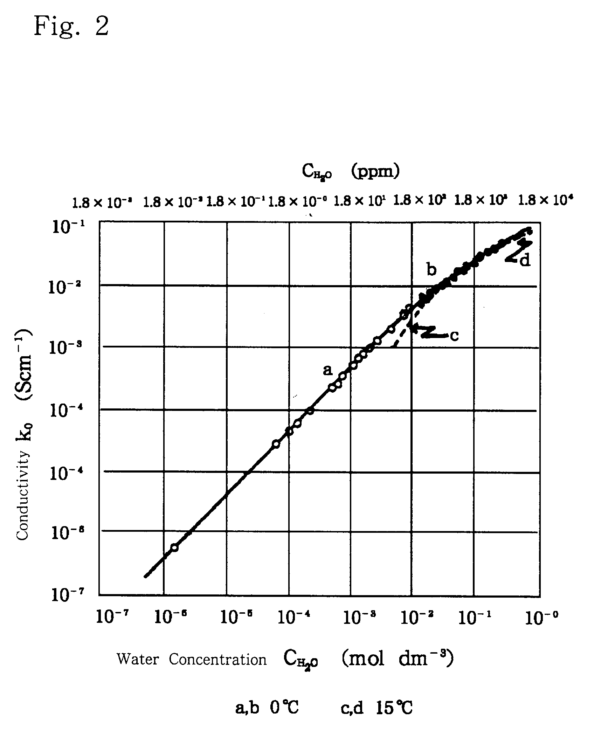

Moreover, the present inventors have studied the relationship between the degree of ion dissociation of water and the concentration of the water in liquid hydrogen fluoride, which remains in a liquid state within a temperature range of from -83.5°C to $^+$19.5°C at atmospheric pressure, and have discovered that in contrast to cases in which water is present in other solutions, when water is present in hydrogen fluoride, the degree of dissociation thereof is extremely high. This relationship is shown in Figure 2 with respect to the case in which the hydrogen fluoride solution was maintained at a temperature of 0°C.

As shown in Figure 2, the electrical conductivity of the liquid hydrogen fluoride was $5 \times 10^{-3}$ s•cm$^{-1}$, $3 \times 10^{-2}$ s•cm$^{-1}$, and $1 \times 10^{-1}$ s•cm$^{-1}$, respectively, at H$_2$O concentrations of 180 ppm, 1,800 ppm, and 18,000 ppm (1.8%). In particular, cases in which the H$_2$O concentration was 300 ppm or less are thought of as hydrogen fluoride containing 300 ppm of water. Conversion of the water contained in the hydrogen fluoride to a molar value is accomplished as follows:

$$1000(cm^3) \times 1.002(g/cm^3) \times 300 \times 10^{-6}/18 = 0.0167(mol).$$

That is to say, a value of $1.67 \times 10^{-2}$ (mol/l) is attained, and 100% of the water is dissociated, so that:

H$^+$ = OH$^-$ = $1.67 \times 10^{-2}$(mol/l). This is an extremely large value in comparison with the $10^{-7}$ (mol/l) of the aqueous solution system, and represents an important characterizing feature of the hydrogen and oxygen generating apparatus of the present invention. If the water concentration is further increased, the H$^+$ and OH$^-$ concentrations will further increase.

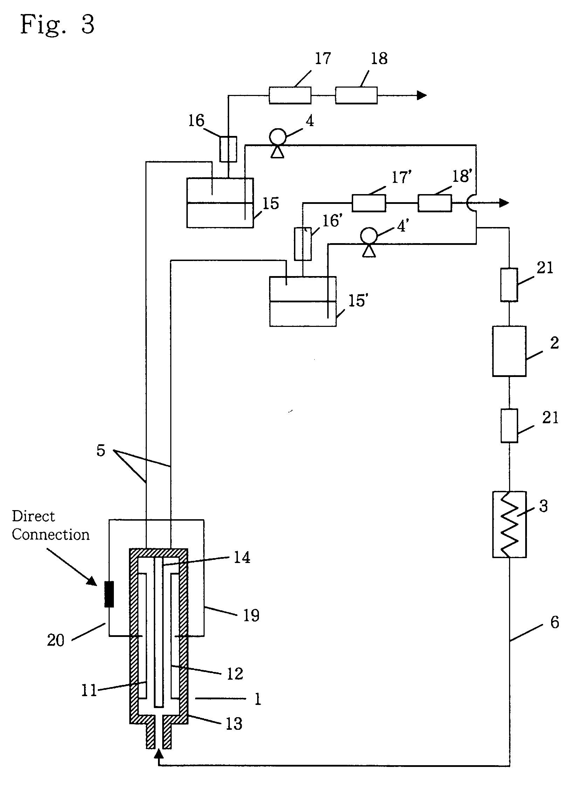

Next, a system example of the hydrogen and oxygen generator of the present invention is shown in Figure 3.

In Figure 3, reference 1 indicates a hydrogen and oxygen generator; anode 11 and cathode 12 are attached to a container 13, the inner surface of which has been subjected to insulation processing, and the oxygen and hydrogen generated at each electrode are divided by partition 14 so that they do not mix, are sent out from respective exits as mixed liquids with anhydrous hydrogen fluoride, are separated into gases and liquids in in gas/liquid separation tanks 15 and 15' along separate lines, and the anhydrous hydrogen fluoride is separated by condensation in coolers 16 and 16'. Furthermore, where necessary, deoxidation processing 17 and 17' and dehydration processing 18 and 18' are conducted. Extension wires 19 and 20 are attached to each electrode, and the current generated is supplied to the exterior.

Reference 2 indicates a water mixing chamber for replenishing the water in the hydrogen fluoride which was depleted by being converted into hydrogen and oxygen. The addition of water may be accomplished by means of methods such as a liquid pump, water vapor injection, membrane permeation, or the like. Conductometers 21 are provided before and after the water mixing chamber, and by means of measuring the water concentration in the hydrogen fluoride within the system, the amount of water supplied can be controlled.

Reference 3 indicates a heat exchanger (providing a heating/cooling function), references 4 and 4' indicate circulation pumps (force feeding mechanisms) for circulating the solution of hydrogen fluoride containing water, and reference 5 indicates piping, the inner surface of which has been subjected to insulation processing.

A solution of hydrogen fluoride containing water at a predetermined concentration is placed in the system shown in Figure 3. In order to maintain safety, it is preferable that the apparatus as a whole be constructed so as to be resistant to pressures on a level of 70kg/cm$^2$. The reason for this is that the critical temperature of the hydrogen fluoride solution is 188°C, and the critical pressure thereof is 66.16 kg/cm$^2$.

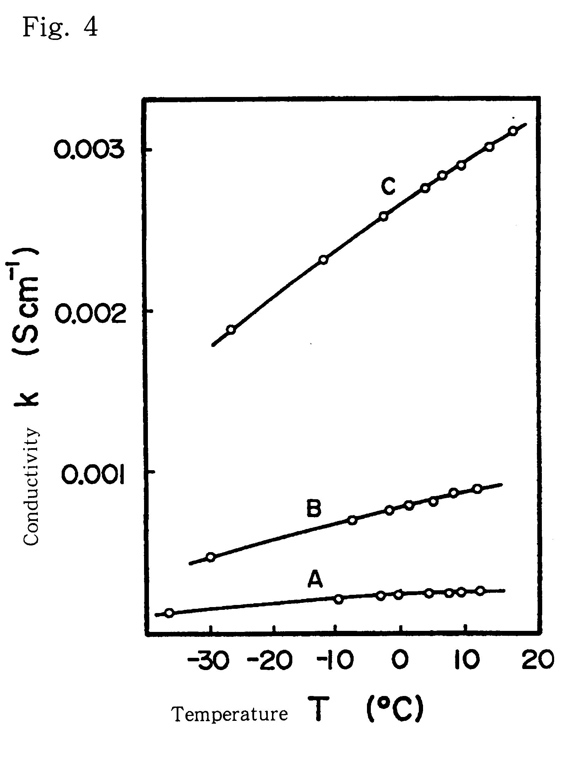

After this, the hydrogen fluoride is cooled in the heating and cooling apparatus 3 and the temperature is maintained at a predetermined temperature within a range of approximately 20°C - $^-$30°C. The changes in conductivity of the hydrogen fluoride with respect to temperature are shown in Figure 4. Lines A, B, and C show the changes in temperature in the cases in which the amount of water is, respectively, 10 ppm, 35 ppm, and 135 ppm. As can be seen from Figure 4, as the temperature decreases, the resistivity of the liquid increases, so that it is preferable that the lower limit of the operating temperatures be set at approximately -30°C. When the extension wiring is connected in this state, as described above, an electrode reaction occurs, a current flows externally from the cathode in the direction of the anode, and oxygen is generated at the anode, while hydrogen is generated at the cathode. The higher the concentration of water in the liquid hydrogen fluoride, or the narrower the gap between electrodes, the more current flows, so that the amount of oxygen and hydrogen generated is larger.

The H$_2$0 added to the anhydrous hydrofluoric acid in water mixing chamber 2 immediately dissociates into ions.

$H_2O \rightarrow H^+ + OH^- + Q$ (Q is the heat of reaction)

As shown by the formula above, the dissociation of the water is an endothermic reaction, so that heat is taken from the hydrogen fluoride liquid, and as circulation is repeated, the temperature of the liquid decreases. As the temperature of the liquid decreases, the electric conductivity of the hydrogen fluoride declines, and the amount of hydrogen and oxygen which can be obtained at gas generator 1 decreases. Thus, heat is applied by means of heat exchanger 3 (a heat application mechanism for applying heat to the hydrogen fluoride liquid), and the temperature of the liquid is maintained at a predetermined temperature.

In Figure 3, a heat exchanger having heating and cooling functions capable of heating and cooling the liquid was employed; however, it is not necessary that the heater and cooler be made unitary, and they may be provided separately. If, for example, pressure is applied to the hydrogen fluoride liquid, the boiling point thereof is increased, so that it is not absolutely necessary that a cooling function be provided.

The vapor pressure of the hydrogen fluoride liquid at various temperatures is shown in Table 1. If pressures of 2.8 $kg/cm^2$ and 10.8 $kg/cm^2$ or more, respectively, are applied, then the hydrogen fluoride will remain in a liquid state even if temperatures of, respectively, 50°C and 100°C are attained.

(Table 1)

| Temperature (°C) | Vapor Pressure (Kg/cm²) | Temperature (°C) | Vapor Pressure (Kg/cm²) | Temperature (°C) | Vapor Pressure (Kg/cm²) |
|---|---|---|---|---|---|
| -70 | 0.014 | -10 | 0.327 | 50 | 2.798 |
| -60 | 0.026 | 0 | 0.492 | 60 | 3.783 |
| -50 | 0.047 | 10 | 0.724 | 70 | 4.992 |
| -40 | 0.080 | 20 | 1.055 | 80 | 6.539 |
| -30 | 0.132 | 30 | 1.491 | 90 | 8.367 |
| -20 | 0.211 | 40 | 2.074 | 100 | 10.757 |

The cooler is only required in the initial period of operation of the system, so that it is not particularly necessary to install a dedicated unit. Furthermore, with respect to the source of the thermal energy applied by the heat application means, in addition to solar energy, geothermal energy, and the waste thermal energy of incinerators, it is also possible to employ the thermal energy of sea or river water or the like, as the operational temperatures are low.

If $LaB_6$ is used for the anode and Pt is used for the cathode in the system of Figure 3, the work functions of Pt and $LaB_6$ are 5.64 - 5.93 eV and 2.66 - 2.76 eV, respectively, so that the difference in the work functions is on the level of 2.88 - 3.27 eV, and current flows efficiently to the exterior and oxygen and hydrogen are also efficiently generated.

Furthermore, setting of the hydrogen and oxygen generator is conducted so that the flow rate of hydrogen fluoride containing approximately 1% water is set to 1 $cm^3$ per second, and the electrode reaction of $H^+$ and $OH^-$ is set to 100%, and the number of moles of $H_2O$ molecules contained in 1 $cm^3$ of hydrogen fluoride solution is:

$$1 \times 10^{-2}/18 = 5.6 \times 10^{-3} \text{ mol/cm}^3$$

Accordingly, the amount of hydrogen and oxygen generated is determined by the following formulas:

$2H^+ + 2e^- \rightarrow H_2$
$4OH^- \rightarrow O_2 + 2H_2O + 4e^-$

$$H^2 : (1 \times 10^{-2}/18) \times 24/2 = 6.7 \times 10^{-3} \text{ (l/sec)}$$
$$O^2 : (1 \times 10^{-2}/18) \times 24/4 = 3.3 \times 10^{-3} \text{ (l/sec)}$$

These values refer to the case in which the flow rate of hydrogen fluoride containing approximately 1% water is 1 $cm^3$/sec; if systems are constructed in which the flow rate of the hydrogen fluoride is 1 $m^3$/sec and 1000 $m^3$/sec, then it is possible to create large capacity hydrogen and oxygen generating apparatuses in which hydrogen is produced at the rate of 6.7 l/sec and 6.7 m$^3$/sec, and oxygen is produced at the rate of 3.3 l/sec and 3.3 m$^3$/sec. If the amount of water contained in the hydrogen fluoride is increased, the amount of gas produced can be further increased.

The gap W between the anode and the cathode, and the surface area S thereof, will now be discussed.

The electrical resistivity $\rho_1$ of hydrogen fluoride solutions containing 300 ppm and 1.8% of water at a temperature of 0°C are approximately 125 $\Omega \cdot$cm, and 10 $\Omega \cdot$cm, respectively. The electrical resistivity $\rho_0$ of a hydrogen fluoride solution containing almost no water has not yet been determined; however, it can be assumed from Figure 2 that this value would be approximately 10$^7$ $\Omega \cdot$cm or more. If the ion reaction at the anode and cathode is to be carried out efficiently to approximately 100%, then it is desirable that the current density J (A/cm$^2$) be set to within a range of 10 mA/cm$^2$ to 100 mA/cm$^2$. If the resistivity of a hydrogen fluoride solution containing water is represented by $\rho_1$ ($\Omega \cdot$cm), then the voltage drop $\Delta$V between the anode and the cathode can be thought of as:

$$\Delta V = \rho_1 WJ \ (V).$$

If $\rho_1$ = 125 $\Omega \cdot$cm and J = 10 mA/cm$^2$ - 1000 mA/cm$^2$, then:

$$\Delta V = 1.25W(V) - 12.5W \ (V).$$

If W = $1 \times 10^{-2}$ cm = 100 $\mu$m, then

$$\Delta V = 0.0125V - 0.125V$$

and a current flows efficiently, and it is possible to efficiently generate hydrogen and oxygen.

If W = 1 mm, then

$$\Delta V = 0.125V - 1.25V,$$

and when the current density J becomes large, the voltage drop between the anode and the cathode becomes excessively large, it becomes impossible to efficiently cause a current to flow, and the amount of hydrogen and oxygen generated decreases drastically. When the current density is set to a large value, it is necessary to set the gap W between the anode and cathode so as to be small, and it is necessary to set the amount of water contained in the hydrogen fluoride solution to a large value within a range of 1,000 ppm - 20,000 ppm. The efficiency of the ion reaction at the electrode surfaces and the current density can be controlled by altering the gap W and the flow rate of the liquid. When the amount of water contained in the hydrogen fluoride solution is reduced, the resistivity $\rho_1$ of the liquid increases and the current density becomes small, so that the surface areas of the anode and the cathode must be made large, and this is inefficient.

The amount of hydrogen and oxygen generated is determined by the amount of current flowing between the electrodes. According, in order to obtain large amounts of hydrogen and oxygen, it is necessary to directly connect the anode and cathode, to reduce the distance between electrodes as much as possible, and to conduct operations using as large an amount of water in the hydrogen fluoride as possible.

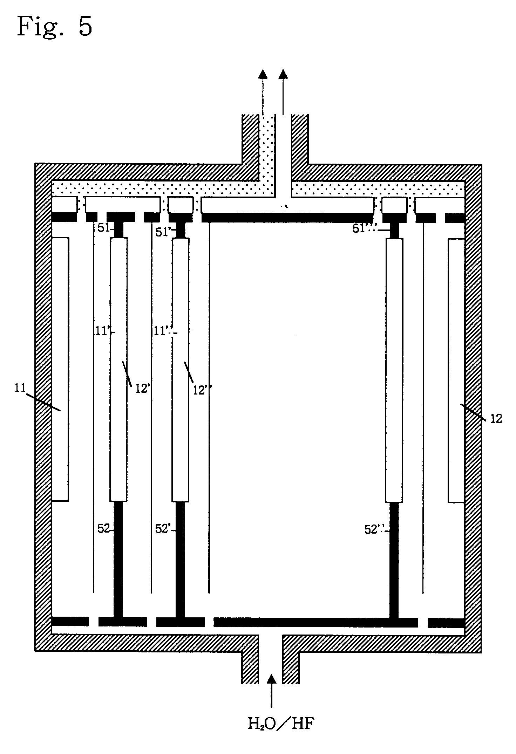

In the example shown in Figure 3, in which one cathode/anode pair is provided, in order to increase the amount of hydrogen and oxygen generated, the surface area of the electrodes must be increased; however, from the point of view of apparatus manufacture, a single pair of electrodes is disadvantageous in terms of space, so that it is preferable to provide a number of stages of electrodes, as shown in Figure 5.

In Figure 5, the interior of the container is partitioned by insulating dividing plates (for example, fluorine resins such as PTFE, PFA, and the like) 51, 51', 51'', ... , 52, 52', 52'',..., 53, and 54, and by electrodes, so that one chamber comprises a unit cell containing partitions. The electrode 11 on the left-hand side of the Figure is an electrode having a small work function (for example, LaB$_6$, TiN, or the like), and the electrode 12 on the right-hand side is an electrode having a large work function (for example, Pt, Pd, Au, Ni, or the like), and the electrodes provided therebetween are electrodes in which, for example, LaB$_6$ (11, 11',11'' ...) and Pt (12, 12', 12'' ...) are affixed to one another. Furthermore, it is of course the case that electrodes in which Pt and LaB$_6$ are coated on or affixed to the front and rear of a metal such as stainless steel or the like may also be employed. If each cell has the same structure, and the same amount of hydrogen fluoride solution is caused to flow, then the amount of hydrogen and oxygen generated will be that generated in the case of one cell multiplied by the number of stages.

In Figure 5, dividing plates 52, 52',..., which are constructed using a fluorine resin or the like, are provided; however, if the voltage drop in the hydrogen fluoride solution between electrodes can be sufficiently disregarded, then these dividing plates are not necessary. Furthermore, since the $H^+$ and $OH^-$ formed by means of the electrode reaction in the hydrogen fluoride are converted into $H_2$ and $O_2$, the dividing plates 51, 51',... are necessary for the separation thereof.

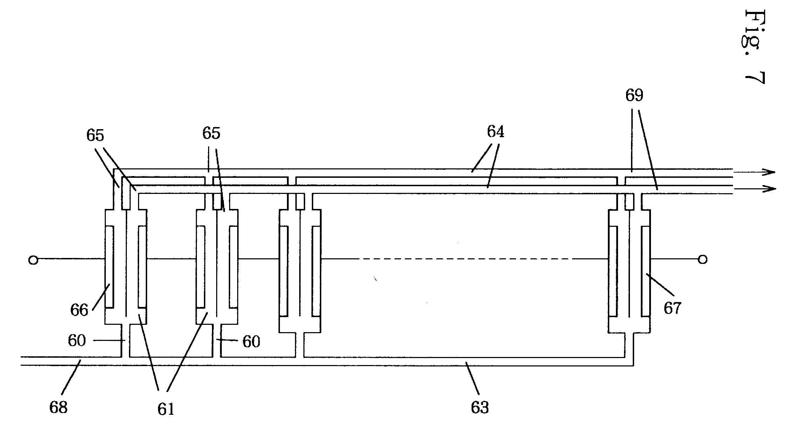

In addition to the method shown in Figure 5, another method for providing multiple stages is that in which a plurality of unit cells are connected in a manner identical to that shown in Figure 5 to form a unit 61, and as shown in Figure 7, the entrances 60 of units 61, with the main input pipe 63 and the main output pipe 64, are formed into a circulating system via a water mixing chamber (not depicted in the Figure) and a force feeding mechanism (not depicted in the Figure). By adopting such a structure, it is possible to further increase the amount of hydrogen and oxygen which is generated.

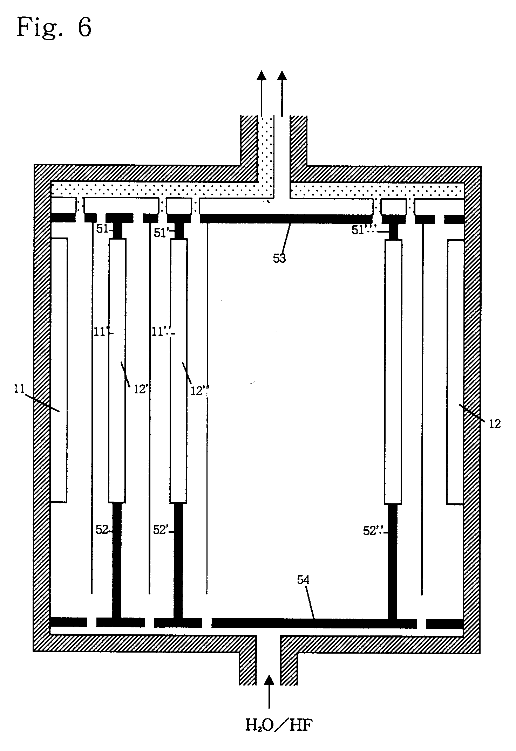

As shown in Figure 6, there is also a method in which the electrodes are not directly affixed to one another, but are affixed to the dividing plates, which comprise fluorine resin.

In the case, for example, in which the introduction port 68 into the main input pipe 63 is provided at the left-hand side as shown in Figure 7, it is desirable that the exhaust port 69 of the main output pipe 64 be provided at the right-hand side, as shown in Figure 7, from the point of view of uniform supply of solution to each unit 61.

Furthermore, if each unit 61 is made freely attachable to and detachable from the main input pipe 63 and the main output pipe 64, then in the case in which any of the units is damaged, only that unit which is damaged can be removed and repaired without a stoppage in the operation of the system as a whole. A circuit (not depicted in the Figure) which automatically connects the electrodes of both units adjacent to the unit which is being repaired at this time may be provided. If branch valves (three way valves) are provided at the entrance 60 and the exit 65 of each unit 61, then it is possible to facilitate the removal and exchange of the solution in each unit 61. Furthermore, flow meters or the like may be provided at entrances 60 and exits 65.

Embodiment Examples

(Solvent, Added Substance)

The solvent in the present invention is a solvent which does not dissociate by itself, and the substance which is added to this solvent is a substance which dissociates in the solvent.

Examples of such a combination include, for example, a combination of hydrogen fluoride as the solvent, and water as the added substance.

The concentration of the added substance varies depending on the concrete combination of the solvent and added substance; however, in the case, for example, of the combination of hydrogen fluoride and water, the amount of water added is preferably 2% or less. If the amount is greater than this, the liquid would not be one in which water was added to anhydrous hydrogen fluoride. However, 10 ppm or more is necessary so that the resistivity does not become too large, as seen in Figure 2.

That is to say, anhydrous hydrogen fluoride itself does not have strong corrosivity; however, when water is added thereto, the corrosivity increases, and when the amount of water added exceeds approximately 2%, the anode and cathode described hereinbelow become corroded. Accordingly, it is preferable that the amount of water be 2% or less from the point of view of preventing this corrosion. However, when the amount of water is 10 ppm or less, 100% of the water dissociates, but the ion concentration is low, so that the electrical resistivity of the hydrogen fluoride solution becomes excessively large, having a value of a few $k\Omega \cdot cm$ or more, and an efficient hydrogen and oxygen generating system cannot be constructed.

In the present invention, the reason for the use of a solvent which itself does not dissociate is as follows. It is preferable that electrodes be disposed in multiple stages in the hydrogen and oxygen generating apparatus, as shown in Figure 5, in order to obtain large amounts of gas. Moreover, if the solvent were to dissociate, the ions produced as a result of this dissociation would themselves carry the load, so that a current would flow in the interval with the other electrode. This would result in a loss of power. Furthermore, when the solvent itself ionizes and turns to gas as a result of the ion reaction at the electrodes, stable power generation cannot be maintained.

It is desirable that the water which is added possess the properties listed below:

| resistivity (MΩ•cm 25°C) | > 18 |
|---|---|
| particles (pcs/cc) > 0.1μm | < 20 |
| TOC (μgC/l) | < 50 |
| dissolved oxygen (μgO/l) | <100 |

(Electrodes)

It is preferable that the difference in work function between the anode and cathode which are used in the present invention be as great as possible. This is so that a current can be efficiently caused to flow to the exterior and so that hydrogen and oxygen can be efficiently generated. However, since hydrogen fluoride which contains water has high corrosivity, as described above, it is necessary that the materials used possess corrosion resistance. Examples of such materials include, for example, with respect to the anode, Pt, Au, Ni, Pd, and the like.

Furthermore, examples of materials used for the cathode include, for example, $LaB_6$, TiN, NbC, $W_2C$, ZrN, ZrC, Cs, or the like. It is of course sufficient if only that portion of the electrode which is in contact with the hydrogen fluoride solution containing water comprises such materials; accordingly, electrodes in which an appropriate material is used as a base material, and the surfaces thereof are clad in such corrosion resistant materials, may be employed.

However, oxide films and the like, although extremely thin, commonly form on the surfaces of such materials, and impurities are deposited thereon. The presence of such oxide films or impurities interferes with the reaction at the electrode surface. However, in the present invention, hydrogen fluoride containing water is used as the solution, so that simply by immersing the electrodes in this solution, it is possible to remove such oxide films or impurities, and furthermore, it is possible to expose the active surfaces of the electrodes, and this constitutes an important advantage. This is one reason why it is preferable to employ a hydrogen fluoride solution containing water in the present invention.

Furthermore, it is preferable that the distance between the opposing electrodes be as small as possible. If the distance is large, the current value will decrease as a result of the electrical resistance possessed by the hydrogen fluoride solution containing water between the electrodes, and it becomes impossible to generate large amounts of current. Concretely, a distance of 1 cm or less is preferable, and a distance of 1 mm or less further preferable. The lower limit may be appropriately determined in consideration of the pressure loss when the solution is circulated or the difficulty of construction; however, a value within a range of 0.1 mm - 0.3 mm is preferable.

For the purposes of reference, the work function values of each electrode are shown below.

| ●Anode | |
|---|---|
| Au | 5.1 - 5.47 eV |
| Ni | 5.04 - 5.35 eV |
| Pt | 5.64 - 5.93 eV |
| Pd | 5.55 eV |

| ●Cathode | |
|---|---|
| $LaB_6$ | 2.66 - 2.76 eV |
| TiN | 2.92 eV |
| NbC | 2.24 - 4.1 eV |
| W2C | 2.6 - 4.58 eV |
| ZrN | 2.92 eV |
| ZrC | 2.18 - 4.22 eV |
| Cs | 1.95 eV |

With respect to those substances which exhibit a wide range in the work function values thereof, this range depends on the crystalline structure or manufacturing method.

(Container)

In the present invention, the container which is employed to hold the hydrogen fluoride solution containing water has an interior (that is to say, the portion in which the hydrogen fluoride solution is contained) which is isolated from the atmosphere. If the hydrogen fluoride liquid comes into contact with the atmosphere, it will absorb moisture from the atmosphere. Accordingly, it is isolated from the atmosphere in order to prevent this.

Any material may be used for this container, insofar as the material possesses corrosion resistance with respect to hydrogen fluoride containing water. For example, a fluorine resin (more concrete examples thereof being PTFE, PFA, or the like) may be employed. It is of course the case that only those portions which are in contact with the hydrogen fluoride solution containing water need comprise, for example, PTFE; accordingly, an inner surface comprising, for example, stainless steel may be lined with PTFE or PFA. In addition, for example, the container may comprise a metal material, on the surface of which is formed a fluoride passivated film approximately satisfying a stoichiometric ratio. Furthermore, the use of a container in which a metal surface, having formed thereon a fluoride passivated film which approximately satisfies a stoichiometric ratio, is lined with a fluorine resin, is most preferable. The use of iron, stainless steel (in particular SUS 316L), aluminum alloy, or magnesium alloy is preferable as the metallic material forming the base material on which a fluoride passivated film is formed. The fluoride passivated films ($FeF_2$, $AlF_3$, $MgF_2$) which are formed on the metallic materials are extremely fine, exhibit extremely high corrosion resistance with respect to hydrogen fluoride containing water, and possess superior electric insulation properties. Such fluoride passivated films may employ the formation technology disclosed in, for example, Japanese Patent Application, First Publication, No. Hei 2-270964.

The boiling point of hydrogen fluoride is 19.6°C, so that at normal temperatures, there is a possibility that it will change to a gaseous state. Pressure may be applied in order to prevent gasification. For example, if a pressure of approximately 11 $kg/cm^2$ is applied, gasification can be prevented even at a temperature of 100°C. This is as previously described in the "Function" section.

At this time, in order to provide strength with respect to pressure, it is preferable that a material in which metal is used as a substrate and PTFE, FFA, or the like is applied to the interior thereof be used, or that a material in which a metallic material, on the surface of which a fluoride passivated film approximately satisfying a stoichiometric ratio is formed, is further coated or lined with PTFE, PFA, or the like, be used. Furthermore, this results in lowered costs. When such a structure is employed, a loss of pressure resulting from the circulation of the hydrogen fluoride liquid is a danger; however, the viscosity of hydrogen fluoride is extremely low in comparison to that of other solutions (characteristic values for hydrogen fluoride and water are shown in Table 2), so that accordingly, only an extremely small amount of pressure is required for the force feeding of the solution. In this way, when a circulating system is established, the use of hydrogen fluoride as the solvent is extremely advantageous, and the circulating system described above makes skillful use of this characteristic of hydrogen fluoride. Furthermore, all that must be replenished externally is heat and water, so that maintenance is very simple.

(Table 2)

| Characteristics | HF | $H_2O$ |
|---|---|---|
| Boiling Point, °C | 19.54 | 100.0 |
| Melting Point, °C | -83.55 | 0.0 |
| Density, $g/cm^3$ | 1.002 | 0.9999 |
| Viscosity (0°C), cP | 0.256 | 1.7921 |
| Surface tension (0°C), dyn/cm | 10.1 | 74.28 |
| Dielectric constant, (0°C) | 83.6 | 81.0 |
| Dipole moment (0°C), C•m | $6.10 \times 10^{-30}$ | $6.24 \times 10^{-30}$ |
| Specific heat, cal/g•deg | 0.61 | 1.0 |

11

Best Mode for Carrying Out the Invention

(Embodiment 1)

Using a system having the structure shown in Figure 3, a first embodiment of the present invention will be explained

In Figure 3, reference 1 indicates a hydrogen and oxygen generator; an anode 11 comprising $LaB_6$ and a cathode 12 comprising Pt are attached to a stainless steel container, the surface of which is lined with PFA. The electrodes have a length of 15 cm and a width of 10 cm, and the gap between electrodes was set to 100 $\mu$m. References 19 and 20 indicate extension wires for extracting current.

Reference 2 indicates a water mixing chamber; an amount of water identical to that which was converted into hydrogen and oxygen and thus consumed is introduced via a volumetric pump, and this is completely mixed.

Reference 3 indicates a heating and cooling apparatus. Reference 4 indicates a pump for circulating hydrogen fluoride solution to water mixing chamber 2, heating and cooling mechanism 3, and in the piping. Reference 6 indicates a thermometer.

A hydrogen fluoride solution in which approximately 1% of water was added to anhydrous hydrogen fluoride (purity 99.99%) was introduced.

First, while circulating the hydrogen fluoride solution at a flow rate of 1 cc/sec, the output of the thermometer 6 was fed back to the heating and cooling mechanism and the temperature of the hydrogen fluoride solution was maintained at 0°C. The amount of water contained in the hydrogen fluoride was verified by means of the conductivity at water mixing chamber 2 and the conductometers before and after this chamber.

When the amount of gas generated in this state was measured, it was determined that hydrogen gas was generated at 6.7 ml/sec, and oxygen gas was generated at 3.3 ml/sec.

(Embodiment 2)

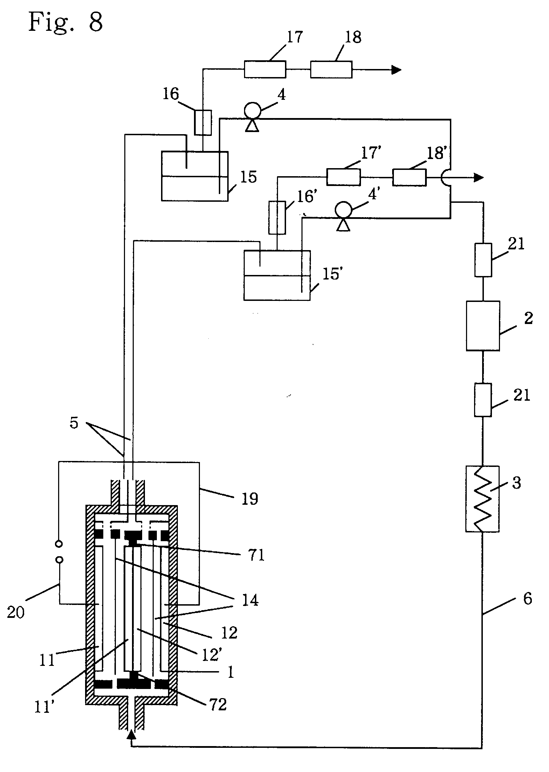

Figure 8 shows a second embodiment of the present invention.

Two groups of gas generator electrodes are provided; this apparatus serves to generate large amounts of gas. In the Figure, reference 11 is an electrode comprising $LaB_6$, and in the central electrode, the left-hand side 11' comprises Pt, while the right-hand side 12' comprises $LaB_6$. References 71 and 72 indicate insulating dividing plates which separate the cells; in the present embodiment, PTFE was used therefor. All other references are identical to those in Figure 3.

The size of the electrodes was set to 15×10 cm, the distance between electrodes was set to 100 $\mu$m, and the length of dividing plates 71 and 72 was set to 5 cm and 15 cm, respectively.

In the same manner as in Embodiment 1, a solution in which approximately 1% of water was contained in anhydrous hydrogen fluoride was introduced into the system, and the hydrogen fluoride solution containing water was circulated at a flow rate of 2 $cm^3$/sec. At this time the amount of gas generated was 13.4 ml/sec of hydrogen gas and 6.6 ml/sec of oxygen gas.

**Industrial Applicability**

In accordance with the present invention, it is possible to provide a generating apparatus which is capable of obtaining large amounts of highly pure hydrogen and oxygen simultaneously and at low cost, which uses almost no fossil fuels and does not contaminate the global environment.

It is of course the case that the hydrogen and oxygen generating apparatus in accordance with the present invention may be reduced or increased in size based on the number of electrodes. Because a high temperature heat source is not required, the effective use of energy which cannot presently be effectively used as an energy source, such as solar energy, waste heat energy, sea water, river water, and various kinds of waste water having somewhat high temperatures, becomes possible.

**Claims**

1. A hydrogen and oxygen generating apparatus, characterized in that a solution, in which a substance which dissociates in a solvent, which does not dissociate by itself, is added to said solvent, is contained in a container having an inner surface possessing corrosion resistance with respect to said solution, and an anode having a small work function and a cathode having a large work function are immersed in a mutually opposed manner in said solvent contained within said container.

2. A hydrogen and oxygen generating apparatus in accordance with Claim 1, characterized in being provided with:

a container having an inner surface possessing corrosion resistance with respect to hydrogen fluoride containing water;

a solution contained within said container so as to be isolated from the atmosphere, and comprising water added to anhydrous hydrogen fluoride;

an anode, comprising a material possessing corrosion resistance with respect to hydrogen fluoride containing water and having a small work function, and a cathode, comprising a material possessing corrosion resistance with respect to hydrogen fluoride containing water and having a large work function, immersed in said solution so as to be mutually opposed; and

a heat application means for applying predetermined heat to said solution.

3. A hydrogen and oxygen generating apparatus in accordance with Claim 2, characterized in that a concentration of said water is 2% or less.

4. A hydrogen and oxygen generating apparatus in accordance with Claims 1 and 2, characterized in that partitions which separate hydrogen generated at the surface of said cathode and oxygen generated at the surface of said anode of said container so that they do not mix are provided, the hydrogen or oxygen which is generated is separated from anhydrous hydrogen fluoride, and these are extracted independently.

5. A hydrogen and oxygen generating apparatus in accordance with Claim 4, characterized in that an entrance and an exit are provided in said container, said entrance and said exit are connected with piping via a force feeding means for force feeding solution within said container and super high purity water having an extremely low impurity concentration is added and mixed in said piping.

6. A hydrogen and oxygen generating apparatus in accordance with one of Claims 1 through 5, characterized in that the anode and the cathode are affixed to one another, and these affixed electrodes are disposed in a plurality of stages so that the anode surface and the cathode surface are in mutual opposition.

7. A hydrogen and oxygen generating apparatus in accordance with one of Claims 1 through 6, characterized in that said cathode comprises one of Pt, Au, Ni, and Pd.

8. A hydrogen and oxygen generating apparatus in accordance with one of Claims 1 through 7, characterized in that the anode comprises one of $LaB_6$, TiN, NbC, $W_2C$, ZrN, ZrC, and Cs.

9. A hydrogen and oxygen generating apparatus in accordance with one of Claims 1 through 8, characterized in that the cathode comprises a metallic material having the surface thereof clad with one of Pt, Au, Ni, and Pd.

10. A hydrogen and oxygen generating apparatus in accordance with one of Claims 1 through 9, characterized in that the anode comprises a metallic material having one of $LaB_6$, TiN, NbC, $W_2C$, ZrN, ZrC, and Cs clad on the surface thereof.

11. A hydrogen and oxygen generating apparatus in accordance with one of Claims 1 through 10, characterized in that the distance between opposing electrodes is set to 1 cm or less.

12. A hydrogen and oxygen generating apparatus in accordance with Claim 11, characterized in that the distance between opposing electrodes is set to 0.1 mm or more.

13. A hydrogen and oxygen generating apparatus in accordance with one of Claims 1 through 12, characterized in that said container comprises a fluorine resin.

14. A hydrogen and oxygen generating apparatus in accordance with one of Claims 1 through 12, characterized in that said container comprises a metallic material, the surfaces of which are lined or coated with a fluorine resin.

15. A hydrogen and oxygen generating apparatus in accordance with one of Claims 1 through 12, characterized in that said container comprises a metallic material having a fluoride passivated film which fulfills an approximate stoichiometric ratio formed on the surface thereof.

16. A hydrogen and oxygen generating apparatus in accordance with one of Claims 1 through 12, characterized in that said container comprises a material in which a metallic material has formed on the surfaces thereof a fluoride passivated film which satisfies an approximate stoichiometric ratio, and this is lined or coated with fluorine resin.

17. A hydrogen and oxygen generating apparatus, characterized in that the metallic material of Claims 14, 15, and 16 comprises iron or stainless steel.

18. A hydrogen and oxygen generating apparatus, characterized in that units possessing:
    a container having an inner surface possessing corrosion resistance with respect to hydrogen fluoride containing water, and possessing an entrance and exit,
    a solution stored within said container so as to be isolated from the atmosphere, comprising water added to anhydrous hydrogen fluoride, and
    an anode comprising a material possessing corrosion resistance with respect to hydrogen fluoride containing water and having a small work function, and a cathode comprising a material possessing corrosion resistance with respect to hydrogen fluoride containing water and having a large work function, immersed in said solution within said container so as to be in mutual opposition;
    have entrances connected to one another by a main input pipe, and have exits connected to one another by a main output pipe, the main input pipe and the main output pipe are connected via a force feeding means for force feeding solution within said container, and via a mixing tank for introducing water into the system and completely mixing the water, and electrodes of each unit are separated by means of a diaphragm, tanks which extract a mixed liquid of anhydrous hydrogen fluoride and oxygen or hydrogen and separate the gas and the liquid are provided, extraction wirings are mutually connected in series, and a heat application means for applying predetermined heat to said solution is provided.

19. A hydrogen and oxygen generating apparatus in accordance with Claim 18, characterized in that the anodes and the cathodes are joined, and said joined electrodes are disposed in multiple stages so that the anode sides and the cathode sides are in mutual opposition.

Fig. 1

# Fig. 2

$C_{H_2O}$ (ppm)

$1.8 \times 10^{-3}$  $1.8 \times 10^{-2}$  $1.8 \times 10^{-1}$  $1.8 \times 10^{-0}$  $1.8 \times 10^{1}$  $1.8 \times 10^{2}$  $1.8 \times 10^{3}$  $1.8 \times 10^{4}$

Conductivity $k_0$ (Scm$^{-1}$)

$10^{-1}$, $10^{-2}$, $10^{-3}$, $10^{-4}$, $10^{-4}$, $10^{-5}$, $10^{-6}$, $10^{-7}$

$10^{-7}$  $10^{-6}$  $10^{-5}$  $10^{-4}$  $10^{-3}$  $10^{-2}$  $10^{-1}$  $10^{-0}$

Water Concentration $C_{H_2O}$ (mol dm$^{-3}$)

a,b  0℃      c,d  15℃

Fig. 3

Fig. 4

# Fig. 5

## Fig. 6

H$_2$O/HF

Fig. 7

Fig. 8

**A.  CLASSIFICATION OF SUBJECT M   TER**

Int. Cl$^5$  C25B9/00

According to International Patent Classificatio.   ?C) or to both nation.  classification and IPC

**B.   FIELDS SEARCHED**

Minimum documentation searched (classification system followed by classification symbols)

Int. Cl$^5$  C25B9/00, 1/02-1/10

Documentation searched other than minimum documentation to the extent that such documents are included in the fields searched

| | |
|---|---|
| Jitsuyo Shinan Koho | 1926 - 1993 |
| Kokai Jitsuyo Shinan Koho | 1971 - 1993 |

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| Y | JP, A, 50-74572 (Masakuni Kanei),<br>June 19, 1975 (19. 06. 75), (Family: none) | 1-19 |
| Y | JP, A, 49-78696 (Otoji Ishizaka),<br>July 29, 1974 (29. 07. 74), (Family: none) | 1-19 |
| Y | JP, U, 56-134370 (Kurolin Engineers K.K.),<br>October 12, 1981 (12. 10. 81), (Family: none) | 1-19 |
| Y | JP, A, 54-69574 (Director General,<br>Agency of Industrial Science and Technology),<br>June 4, 1979 (04. 06. 79), (Family: none) | 4-17 |
| Y | JP, A, 55-141583 (Hoechst AG.),<br>November 5, 1980 (05. 11. 80),<br>& US, A, 4309264 & EP, B1, 20887<br>& CA, A1, 1145707 | 6-19 |
| Y | JP, A, 4-9485 (Yoshiro Nakamatsu),<br>January 14, 1992 (14. 01. 92), (Family: none) | 6-19 |

| | | | |
|---|---|---|---|
| [X] | Further documents are listed in the continuation of Box C. | [ ] | See patent family annex. |

| |
|---|
| * Special categories of cited documents: |
| "A" document defining the general state of the art which is not considered to be of particular relevance |
| "E" earlier document but published on or after the international filing date |
| "L" document which may throw doubts on priority claim(s) or which is cited to establish the publication date of another citation or other special reason (as specified) |
| "O" document referring to an oral disclosure, use, exhibition or other means |
| "P" document published prior to the international filing date but later than the priority date claimed |

| |
|---|
| "T" later document published after the international filing date or priority date and not in conflict with the application but cited to understand the principle or theory underlying the invention |
| "X" document of particular relevance; the claimed invention cannot be considered novel or cannot be considered to involve an inventive step when the document is taken alone |
| "Y" document of particular relevance; the claimed invention cannot be considered to involve an inventive step when the document is combined with one or more other such documents, such combination being obvious to a person skilled in the art |
| "&" document member of the same patent family |

| | |
|---|---|
| Date of the actual completion of the international search<br><br>December 3, 1993 (03. 12. 93) | Date of mailing of the international search report<br><br>December 21, 1993 (21. 12. 93) |
| Name and mailing address of the ISA/<br><br>Japanese Patent Office | Authorized officer |
| Facsimile No. | Telephone No. |

Form PCT/ISA/210 (second sheet) (July 1992)

International application No.

PCT/JP93/01379

C (Continuation).   DOCUMENTS CONSIDERED TO BE RELEVANT

| Category* | Citation of document, with indication, where appropriate, of the relevant passages | Relevant to claim No. |
|---|---|---|
| Y | JP, A, 58-52489 (Perumelek Denkyoku K.K.), March 28, 1983 (28. 03. 83), & US, A, 4500405 & US, A, 4568568 & GB, B2, 2107737 & CA, A1, 1203775 & KR, B1, 8901070 | 8-17 |